# EUROPEAN PATENT APPLICATION

(11) **EP 4 531 169 A1**
(43) Date of publication of application: **02.04.2025**
(21) Application number: 23909143.2
(22) Date of filing: 25.07.2023
(51) Int. Cl.: H01M 10/615, H01M 10/625, H01M 10/643, H01M 10/658

(54) **INSULATED BATTERY PACK AND THERMAL MANAGEMENT METHOD**

(30) Priority: 30.12.2022 CN 202211721974; 30.12.2022 CN 202223608141 U
(71) Applicant: Eve Power Co., Ltd., Jingmen, Hubei 448000 (CN)
(72) Inventor: HUANG, Liansheng, Jingmen, Hubei 448000 (CN); WANG, Yuanyuan, Jingmen, Hubei 448000 (CN); LIU, Huajun, Jingmen, Hubei 448000 (CN); ZHAO, Yuhang, Jingmen, Hubei 448000 (CN); LEI, Che, Jingmen, Hubei 448000 (CN)
(74) Representative: Petraz, Gilberto Luigi
(86) International application number: PCT/CN2023/109022
(87) International publication number: WO 2024/139200

(57) **Abstract**

Disclosed in the present application is an insulated battery pack, including a cell set, including a plurality of rows of cells; and an insulating member, provided with two insulating layers. The plurality of rows of the cells are provided on one of the insulating layers, the two insulating layers are provided opposite to each other, a hollow cavity is provided between the two insulating layers, the hollow cavity is filled with gas to form an air layer, so as to reduce thermal conduction between two opposite sides of the air layer.

## Description

The present application claims the priority of Chinese Patent disclosure No. 202211721974.X filed on December 30, 2022 before CNIPA and Chinese Patent disclosure No. 202223608141.0 filed on December 30, 2022 before CNIPA. All the above are hereby incorporated by reference in their entirety.

### TECHNICAL FIELD

The present application relates to the field of batteries, and in particular, to an insulated battery pack and a thermal management method.

### BACKGROUND

A battery pack includes a plurality of cell sets, and is further provided with a battery management system, an electrical system and the like. Battery thermal management is one of the important functions of a battery management system, and is mainly to enable the battery pack to work in a suitable temperature range at all times, so as to maintain an optimal operating state of the cell set. The battery thermal management mainly includes functions of cooling, heating, temperature equalization and the like. The cooling and heating functions are mainly used to adjust for the possible effects of temperature of external environment on the battery. The temperature equalization is used to reduce the temperature difference within the cell set to avoid rapid degradation caused by overheating of a certain part of the battery.

In the battery pack of the related technology, it is difficult to ensure effective thermal insulation measures for the battery pack due to a spatial limitation of the battery case. When the temperature of the external environment is low, although the battery thermal management of the battery management system provides heat to the battery pack, thermal insulation performance of the battery pack leads to a problem of a rapid heat loss.

### SUMMARY

In order to overcome at least one of the defects described above in the related art, an insulated battery pack is provided in the present application, which solves the problem of a rapid heat loss from the battery pack in the related art, thereby improving the thermal insulation performance of the battery pack.

As a first aspect, provided in the present application is an insulated battery pack, including:
a cell set, including a plurality of rows of cells; and
an insulating member, provided with two insulating layers. The plurality of rows of the cells are provided on one of the insulating layers, the two insulating layers are provided opposite to each other, a hollow cavity is provided between the two insulating layers, the hollow cavity is filled with gas to form an air layer, so as to reduce thermal conduction between two opposite sides of the air layer.

In an implementation, the insulating member is further provided with a plurality of positioning holes, a shape and a size of each of the positioning holes are adapted to a shape and a size of each of the cells, and each of the cells is fixed inside each of the positioning holes.
an insulating ring is provided on an inner side wall of each of the positioning holes, and is abutted against an end surface of the corresponding cell.

In an implementation, the insulated battery pack further includes at least one liquid cooling plates. The at least one liquid cooling plates are thermally connected to the cell set.

In an implementation, a plurality of the liquid cooling plates are vertically distributed on the insulating member, each of the plurality of liquid cooling plate is provided between two adjacent rows of the cells, and the plurality of the liquid cooling plates are connected in parallel through liquid cooling tubes.

In an implementation, each of the cells is a cylindrical cell, and the plurality of rows of the cells are staggered in position, and each of the plurality of liquid cooling plates is arranged in a wavelike shape, so that a peripheral surface of each of the cells is engaged with the corresponding liquid cooling plate.

In an implementation, the insulated battery pack further includes a tray rack. The insulating member is provided on the tray rack.

In an implementation, the insulated battery pack further includes a battery case. The cell set, the insulating member, the tray rack and each of the liquid cooling plates are all fixed inside the battery case.

In an implementation, the tray rack is provided with a plurality of pressure relief openings, each of the cells is provided in correspondence with each of the pressure relief openings. A pressure relief channel is provided between the tray rack and the battery case, and an inner bore of the insulating ring, the pressure relief openings and the pressure relief channel are in communication with each other, sequentially, so as to guide hot gas flow generated by the cells in a thermal runaway state to be discharged out of the battery case.

In an implementation, the battery case includes a bottom guard plate and an outer frame in a loop shape. A first step, a second step, and a third step are provided on an inner side wall of the outer frame, and sequentially arranged from a large surface of the outer frame along a height direction of the outer frame, the bottom guard plate is fixed to the first step, and the tray rack is fixed to the third step.

In an implementation, the pressure relief channel includes a first pressure relief chamber and a second pressure relief chamber, the first pressure relief chamber is formed between the tray rack, the bottom guard plate and an inner side wall of the second step, the second pressure relief chamber is provided in the outer frame, and the first pressure relief chamber is in communication with the second pressure relief chamber.

In an implementation, the insulating member and inner side walls of the outer frame form a thermoregulated battery compartment, and the cell set is located inside the thermoregulated battery compartment.

As a second aspect, disclosed in the present application is a thermal management method for a battery pack, including following steps:
comparing and evaluating a measured temperature value of a monitored battery with a preset temperature to adjust a use state and a heat exchange state of the battery, in which the preset temperature includes, from low to high, a first temperature range, a second temperature range, a third temperature range, a fourth temperature range and a fifth temperature range;
a first state indicates that the use state of the battery is a state of no charging and no discharging and the heat exchange state of the battery is a heating state when the measured temperature value is in the first temperature range;
a second state indicates that and the heat exchange state of the battery is the heating state when the measured temperature value is in the second temperature range, the use state of the battery is a charging state;
a third state indicates that the use state of the battery is the charging state or a discharging state and the heat exchange state of the battery is the heating state when the measured temperature value is in the third temperature range;
a fourth state indicates that the use state of the battery is the charging state or the discharging state and the heat exchange state of the battery is a state of no heating and no cooling when the measured temperature value is in the fourth temperature range; and
a fifth state indicates that the use state of the battery is the charging state or the discharging state and the heat exchange state of the battery is the cooling state when the measured temperature value is in the fifth temperature range.

In an implementation, the first temperature range is less than -20 °C, the second temperature range is in a range of -20 °C to 5 °C, the third temperature range is a range of 5 °C to 15 °C, the fourth temperature range is a range of 15 °C to 37 °C, and the fifth temperature range is greater than 37 °C.

In an implementation, the second temperature range is further provided with a first termination temperature value, and the first state is exited when the measured temperature value is greater than the first termination temperature value.

In an implementation, the third temperature range is further provided with a second termination temperature value, and the second state is exited when the measured temperature value is greater than the second termination temperature value.

In an implementation, the fourth temperature range is further provided with a third termination temperature value, and the third state is exited when the measured temperature value is greater than the third termination temperature value.

In an implementation, the fourth temperature range is further provided with a fourth termination temperature value, and the fifth state is exited when the measured temperature value is less than the fourth termination temperature value.

In summary, the insulated battery pack and the thermal management method provided in the present application have the following technical effects:

The air layer is skillfully provided in the insulating member, and the slow thermal conductivity property of the air flow is utilized to promote that the heat cannot be rapidly conducted on two sides of the air layer, so as to avoid a rapid loss of the heat, thereby ensuring and greatly improving the thermal insulation performance of the battery pack assembled with the insulating member, solving the problem of the rapid loss of the heat of the battery pack in the related technology, ensuring that the battery pack can be used in the optimal temperature range for a long period of time to maintain the optimal use state, effectively improving the stability of the battery pack, and also effectively improving the reliability of an electric device (e.g., an electric vehicle) to which the battery pack is applied.

### SUMMARY

### BRIEF DESCRIPTION OF THE DRAWINGS

Fig. 1 is a first overall structural diagram of an insulated battery pack according to a first embodiment of the present application;
Fig. 2 is a schematic diagram illustrating an overall assembly of an insulated battery pack according to the first embodiment of the present application;
Fig. 3 is schematic diagram illustrating a partial enlarged view at A in Fig. 2;
Fig. 4 is schematic diagram illustrating a partial enlarged view at B in Fig. 2;
Fig. 5 is schematic diagram illustrating a partial enlarged view at C in Fig. 2; and
Fig. 6 is a second overall structural diagram of an insulated battery pack of according to a first embodiment of the present application.

Labels: 1 battery pack, 11 cell, 2 insulating member, 21 insulating layer, 22 air layer, 23 positioning hole, 24 insulating ring, 3 liquid cooling plate, 31 first liquid cooling plate, 32 second liquid cooling plate, 4 tray rack, 41 pressure relief opening, 5 battery case, 51 outer frame, 511 first step, 512 second step, 513 third step, 52 bottom guard plate, 531 first pressure relief chamber, 532 second pressure relief chamber, 6 thermoregulated battery compartment.

### DETAILED DESCRIPTION

In the description of the present application, it is to be noted that the terms "up", "down", "front", "back", "left", "right", "vertical", "horizontal", "top", "bottom", "inside", "outside" and other orientation or position relationships are based on the orientation or position relationships shown in the attached drawings. It is only intended to facilitate description of the present application and simplify description, but not to indicate or imply that the referred device or element has a specific orientation, or is constructed and operated in a specific orientation. Therefore, they should not be construed as a limitation of the present application.

### First Embodiment

A power battery (a lithium-ion power battery), in the present embodiment, refers to a cell set 1 and cells 11. Endurance mileage, charging time and use safety of the power battery are mainly limited by characteristics of the power battery. The characteristics of the power battery are significantly affected by the ambient temperature, especially in a low temperature environment, attenuation of both available energy and power is more serious, and long-term use in the low temperature environment may accelerate the aging of the power battery and shorten a service life.

Both capacity and operating voltage of the commonly used power battery may be significantly reduced at -10 °C, and the performance deteriorates even more at -20 °C, which shows that the available discharge capacity drops sharply, and the specific capacity can only be kept about 30% of that at room temperature.

In addition, in the low temperature environment, it is difficult to charge the lithium ion battery, and metal lithium is easily deposited on surfaces of a negative electrode during charging. The growth of lithium dendrites may pierce the separator and cause an internal short circuit of the battery, which not only causes permanent damage to the battery, but also induces thermal runaway of the battery, resulting in a significant reduction in its use safety.

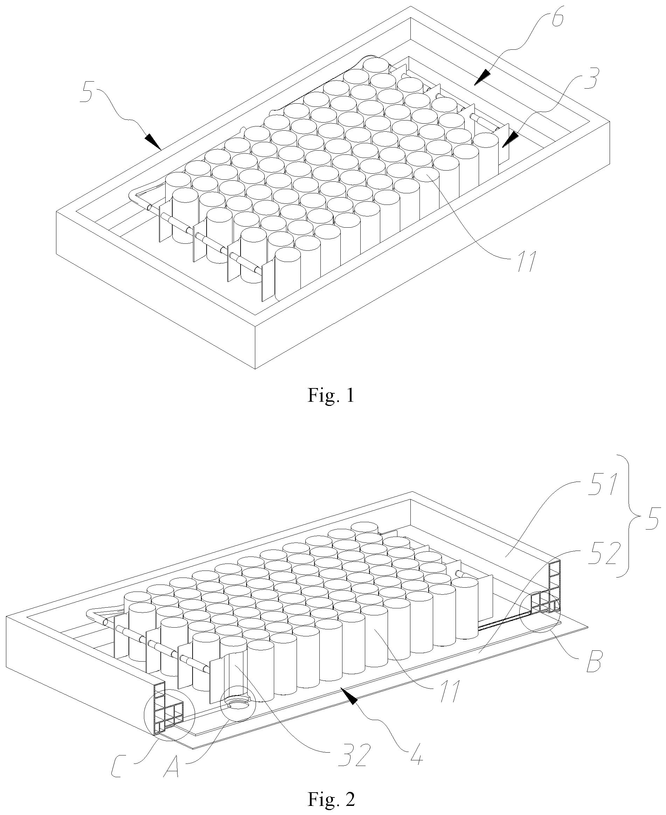

In view of a thermal insulation problem of the power battery, provided in the present application is an insulated battery pack. Referring to Figs. 1 and 2 for details, in order to clearly illustrate assembly relationships between a tray rack 4, as well as an insulating member 2, and a battery case 5, respectively, a schematic diagram of the battery case 5 in a sectional view is shown. The insulated battery pack includes the battery case 5 with the cell set 1, the insulating member 2, and the tray rack 4 provided therein. The cell set 1 includes a plurality of rows of cells 11.

As a core of the present solution, the insulating member 2 is provided with two insulating layers 21, the plurality of rows of the cells 11 are provided on one of the insulating layers 21, the two insulating layers 21 are provided opposite to each other, a hollow cavity is provided between the two insulating layers 21, the hollow cavity is filled with gas to form an air layer 22, the gas may be air or inert gas herein, and in this way, the air layer 22 and the two insulating layers 21 form a sandwich structure.

Thermal conduction is blocked by the gas in the hollow cavity that does not circulate with the outside of the insulating member 2, i.e., the gas in the hollow cavity has a good slow thermal conductivity, so that a rate of conduction from one of the two insulating layers 21 with more heat to the other insulating layer 21 with less heat is decreased, which achieves a purpose of reducing the thermal conduction between the two opposite sides of the air layer 22, thereby enhancing the thermal insulation effect of the insulating member 2 and improving the thermal insulation performance of the insulating member 2.

It should be noted that an insulating material of the insulating member 2 is not limited herein, and the insulating material of the insulating member 2 may be selected from a material with lower thermal conductivity or higher strength according to the use environment of the battery pack and requirements of an electric vehicle. In addition, the insulating material of the insulating member 2 may be arranged on different areas according to a thermal conduction path, so as to achieve an optimal thermal insulation effect.

Specifically, as shown in conjunction with Figs. 1 and 2, the battery case 5 includes a bottom guard plate 52 and an outer frame 51 in a loop shape. One of large surfaces of the outer frame 51 is defined as a horizontal plane, and a direction of the outer frame 51 perpendicular to the horizontal surface is a height direction of the outer frame 51. A first step 511, a second step 512 and a third step are provided on an inner side wall of the outer frame 51 and sequentially arranged from a horizontal plane along the height direction of the outer frame 51. The first step 511, the second step 512, and the third step 513 are uniformly distributed along an inner periphery of the outer frame 5. The bottom guard plate 52 is embedded in the inside of the outer frame 51, and is connected to the first step 511 by welding, so that the battery case 5 as a whole is more flat and more stable. At the same time, the overall airtightness of the battery case 5 is ensured to be good.

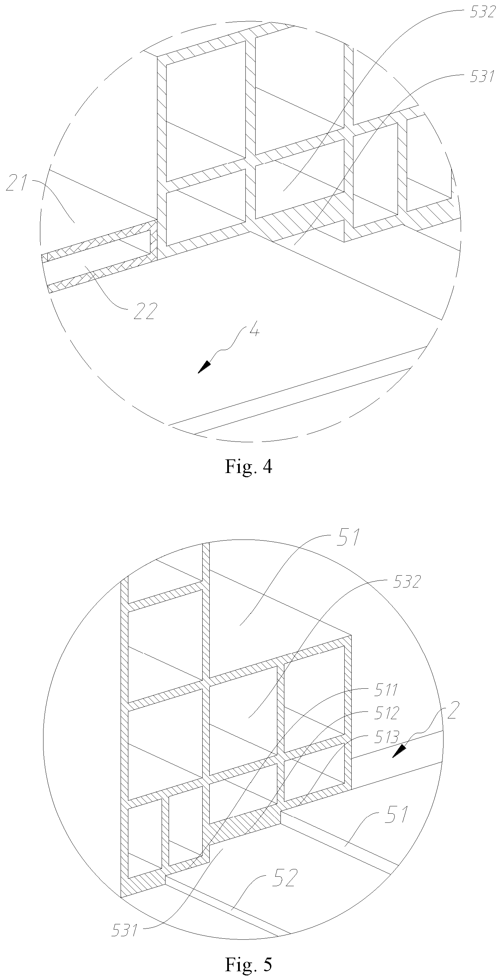

Further, referring to Figs. 2, 4 and 5 for details, the tray rack 4 is embedded in the inside of the outer frame 51, and is fixed to the third step 513 by welding. The insulating member 2 is provided on the tray rack 4, i.e., the insulating member 2 is supported on a top of the tray rack 4, and in this way, the insulating member 2 and inner side walls of the outer frame 51 form a thermoregulated battery compartment 6. When the top of the battery case 5 is covered with a lid, a relatively airtight space is formed inside the thermoregulated battery compartment 6.

When the temperature of the external environment of the battery case 5 is lower than the temperature inside the thermoregulated battery compartment 6, i.e., when the heat inside the thermoregulated battery compartment 6 is greater than the heat of the external environment of the battery case 5, the heat of each of the cells 11 of the cell set 1 is similarly greater than the heat of the external environment of the battery case 5, and the heat of each of the cells 11 may not be easily and directly conducted to the surface of the battery case 5 to be diffused, released and lost since each of the cells 11 is provided on the insulating member 2.

Alternatively, when the battery pack is in a low temperature environment for a longer period of time, only a relatively small part of the heat of the cells 11 may be conducted to the surface of the battery case 5 and lost through the slow conduction of the air layer 22, so as to ameliorate a defect of the heat loss of the battery pack. When the battery pack is in the low temperature environment for a relatively long period of time, the battery management system makes optimal thermal management measures in sufficient time, so that the cell set 1 remains in an optimal temperature range.

Similarly, when the temperature of the external environment of the battery case 5 is higher than the temperature inside the thermoregulated battery compartment 6, i.e., when the heat inside the thermoregulated battery compartment 6 is less than the heat of the external environment of the battery case 5, the heat of each of the cells 11 of the cell set 1 is similarly less than the heat of the external environment of the battery case 5. Under an action of the insulating member 2, the heat of the external environment cannot be directly and quickly transferred to each of the cells 11, or, in a case of the battery pack being in a high temperature environment for a long period of time, the battery management system makes optimal thermal management measures in sufficient time, so that the cell set 1 remains in the optimal temperature range.

In conjunction with the thermal management of the battery management system of the battery pack, the temperature inside the thermoregulated battery compartment 6 and the temperature of each of the cells 11 are kept in a relatively stable state, thereby ensuring that each of the cells 11 can still be used in the optimal temperature range under a condition of low or high external temperature.

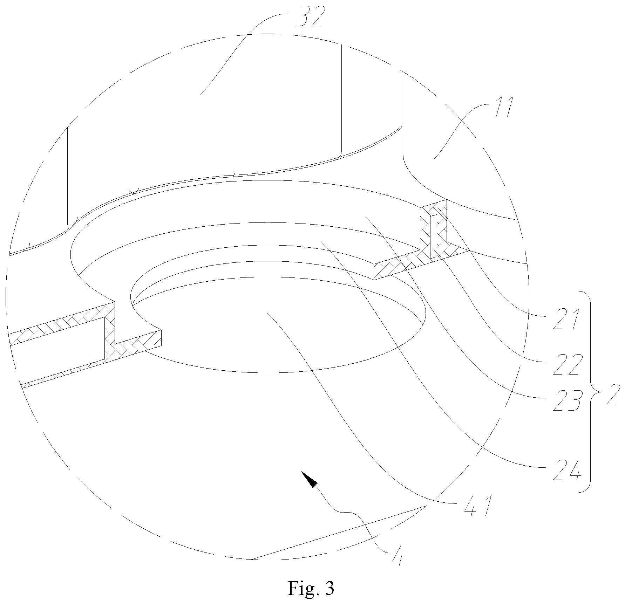

Further, referring to Fig. 3 for details, the insulating member 2 is provided with a plurality of positioning holes 23. A shape and a size of each of the positioning holes 23 is adapted to a shape and a size of each of the cells 11. Each of the cells 11 is fixed inside each of the positioning holes 23, i.e., an end part of each of the cells 11 is inserted in the corresponding positioning hole 23. The shape and the size of the insulating member 2 is preferably fitted to a shape and a size of the thermoregulated battery compartment 6, so that the insulating member 2 is constrained to be fixed inside the thermoregulated battery compartment 6, i.e., a large surface of the bottom side of the insulating member 2 is abutted against the bottom guard plate 52, and a peripheral side of the insulating member 2 is fitted with a peripheral side of the outer frame 51.

The rigidity and structural strength of the insulating layers 21 are skillfully utilized, so that a peripheral side of each of the cells 11 is uniformly stressed on a side wall of the corresponding positioning hole 23. Preferably, the cells 11 are cylindrical cells, and the positioning holes 23 are correspondingly provided as circular holes, so that the peripheral side of each of the positioning holes 23 and the side wall of each of the cells 11 are respectively subjected to forces toward an central axis of each of the cells 11, i.e., structures of the positioning holes 23 cooperate with the structural strength of the insulating layers 21 mutually, so as to effectively ensure that each of the cells 11 is fixed to the insulating member 2, thereby realizing an unexpected effect of the cell set 1 being firmly fixed to the battery case 5.

In an insertion assembly process of the end part of each of the above cells 11, a bottom surface of each of the cells 11 is abutted against the tray rack 4, the weight of the cells 11 is directly carried on the tray rack. However, since the cells 11 are directly in contact with the tray rack 4, which is fixedly connected to the battery case 5, part of the heat of the cells 11 is conducted along the tray rack 4, and ultimately, the heat is conducted from the tray rack 4 to the battery case 5, which leads a small amount of heat loss from the battery pack.

With respect to the above mentioned problem, further disclosed in the present application a further improvement solution. Specifically, as shown in Fig. 3, an insulating ring 24 is provided on an inner side wall of each of the positioning holes 23, i.e., an end of the inner side wall of each of the positioning holes 23 close to the tray rack 4 is extended towards the inside of each of the positioning holes 23 to form the insulating ring 24. Preferably, the insulating ring 24 is integrally molded with the insulating member 2, and the insulating ring 24 is abutted against an end surface of the corresponding cell 11. It should be noted that an inner diameter of the insulating ring 24 is determined according to the battery design or design requirements.

In the assembly process of each of the cells 11, each of the cells 11 is inserted into the corresponding positioning hole 23 until the end part of each of the cells 11 is abutted against the insulating ring 24, which allows each of the cells 11 to act directly on the insulating ring 24 to avoid the phenomenon of knocking between each of the cells 11 and the tray rack 4. And more importantly, each of the cells 11 and the tray rack 4 are separated by the insulating ring 24, so that the heat of each of the cells 11 is not directly conducted to the tray rack 4, thereby solving the heat loss of each of the cells 11 along the tray rack 4.

Further, referring to Fig. 3 for details, the tray rack 4 is provided with a plurality of pressure relief openings 41, and each of the cells 11 is provided in correspondence with each of the pressure relief openings 41, so that when thermal runaway occurs in any one of the cells 11, an high-temperature and high-pressure gas flow generated from the cell 11 flows from the end part of the cell 11 through the inner bore of the insulating ring 24 and the corresponding pressure relief opening 41 in sequence, and ultimately flows out from the corresponding pressure relief opening 41.

It should be added that each of the pressure relief openings 41 is preferably a through hole, so that the pressure relief openings 41 on the tray rack 4 may be formed by stamping, which is a simple process with low cost. A diameter of the through hole is preferably equal to the inner diameter of the insulating ring 24, and the inner diameter of the through hole may also be greater than the inner diameter of the insulating ring 24. In addition, each of the pressure relief openings 41 may also be a countersunk hole. An inner diameter of the countersunk hole is preferably equal to the inner diameter of the insulating ring 24, and the inner diameter of the countersunk hole may also be greater than the inner diameter of the insulating ring 24. Of course, each of the pressure relief openings 41 may also be a recess structure provided with a through hole, and an inner diameter of the through hole is equal to or greater than the inner diameter of the insulating ring 24.

When a dimension of each of the pressure relief openings 41 is greater than the inner diameter of the insulating ring 24, a side of the insulating ring 24 close to the pressure relief opening 41 may be extended toward the inside of the pressure relief opening 41 along a direction of the central axis of the insulating ring 24 to form a protruding structure, which is not shown in the drawings, with the shape and dimension of the protruding structure being adapted to a shape and dimension of the pressure relief opening 41, or with an assembly tolerance retained between the protruding structure and the pressure relief opening 41.

In the above, referring to Figs. 3, 4 and 5 for details, a pressure relief channel is provided between the tray rack 4 and the battery case 5. The pressure relief channel includes a first pressure relief chamber 531 formed between the tray rack 4, the bottom guard plate 52 and the inner side wall of the outer frame 51, i.e., the first pressure relief chamber 531 formed between the tray rack 4, the bottom guard plate 52 and the inner side wall of the second step 512, and a second pressure relief chamber 532 provided in the inside of the outer frame 51. The outer frame 51 is further provided with at least one communicating openings and at least one air outlets, which are not shown in the drawings. The second pressure relief chamber 532 is in communication with the first pressure relief chamber 531 through the at least one communicating openings, and the second pressure relief chamber 532 is in communication with the external environment of the battery case 5 through the at least one air outlet.

Therefore, when any one of the cells 11 is in a thermal runaway state, the high-temperature and high-pressure gas (hot gas flow) released by the cell 11 is output to the first pressure relief chamber 531 through the inner bore of the insulating ring 24 and the corresponding pressure relief opening 41 on the tray rack 4 in sequence, The high-temperature and high-pressure gas, guided by the first pressure relief chamber 531, flows to the inside of the second pressure relief chamber 532 through the corresponding communicating opening, and ultimately, the high-temperature and high-pressure gas flows directionally to the air outlet along the second pressure relief chamber 532 and is discharged outside the battery case 5, thereby realizing an effect of guiding the hot gas flow generated by the cell 11 in the thermal runaway state to be discharged outside the battery case 5 in an orderly manner.

Unexpectedly, by the cooperation of the insulating ring 24 of the insulating member 2, the pressure relief openings 41 of the tray rack 4, the second pressure relief chamber 532 of the outer frame 51, and the first pressure relief chamber 531 provided between the bottom guard plate 52 and the tray rack 4, the high-temperature and high-pressure gases may not be discharged directly to the thermoregulated battery compartment 6 and spread, ensuring that the other cells 11 of the cell set 1 are reduced or even avoided to be affected by the high-temperature and high-pressure gas flow, thereby avoiding a problem that the hot gas flow generated by any one of the cells 11 of the cell set 1 in a case of thermal runaway does not cause heat spreading due to irregular spread within the thermoregulated battery compartment 6, reducing the degree to which the cell set 1 is affected by thermal runaway, and improving the stability of the battery pack in the process of using the battery pack.

When the cells 11 or the cell set 1 are in the case of thermal runaway, or, when the cells 11 are in a case of overcharging or overdischarging, the temperature of the cells 11 is increased significantly. Since the cell set 1 mainly consists of a plurality of cells 11, any one of the cells 11 that do not dissipate heat in a timely manner when the temperature rises may generate heat buildup, and it is easy to render a rapid increase in the temperature of the thermoregulated battery compartment 6 since the cell set 1 is fixed in a relatively closed thermoregulated battery compartment 6.

In order to avoid the usability of each of the cells 11 due to a rise in the temperature of the cell set 1 or the thermoregulated battery compartment 6, the applicant proposes a further improvement in that, as shown in Figs. 1, 2, and 6, a liquid cooling plate 3 is provided inside the battery compartment 5, i.e., the liquid cooling plate 3 is provided inside the thermoregulated battery compartment 6, and the liquid cooling plate 3 is thermally connected to the cell set 1.

A heat exchange medium, such as water, is delivered to the inside of the liquid cooling plate 3. Due to a temperature difference between the heat exchange medium and the thermoregulated battery compartment 6, especially when the cells 11 are in the case of thermal runaway, i.e., when the temperature of the cell set 1 is higher than the temperature of the cells 11, the heat of the cell set 1 is transferred to the heat exchange medium of the liquid cooling plate 3, and is discharged out of the battery pack timely along with a flow of the heat exchange medium, so that a heat exchange between the liquid cooling plate 3 and the cell set 1 is formed to effectively dissipate heat from the cell set 1 in a timely and real-time manner, thereby effectively preventing the cell set 1 from risks of thermal runaway and thermal spreading.

It should be noted that the liquid cooling plate 3 may be provided on a top of the cell set 1, and the liquid cooling plate 3 may also be provided on the peripheral side of the cells 11. Herein, the liquid cooling plate 3 configured on the top of the cell set 1 is defined as a first liquid cooling plate 31, and the liquid cooling plate configured on the peripheral side of the cells 11 of the cell set 1 is defined as a second liquid cooling plate 32, which is only used for the purpose of distinguishing the position of the liquid cooling plate 3 in the subsequent lines of the text, but is not used to limit differences in their structure.

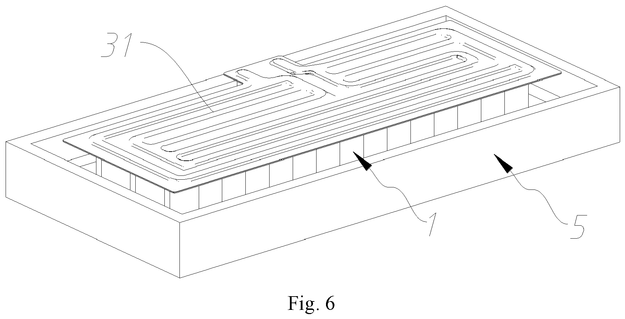

The number of liquid cooling plates 3 may be one. In order to ensure that a heat exchange can be formed between each of the cells 11 and the liquid cooling plate 3 to achieve the purpose of heat dissipation and cooling for each of the cells 11, referring to Fig. 6 for details, the first liquid cooling plate 31 is distributed parallel to the insulating member 2 and is provided on the top of the cell set 1, and the first liquid cooling plate 31 covers at least each of the cells 11, so that the heat released from each of the cells 11 can be conducted from the top of the cells 11 to the first liquid cooling plate 31. The first liquid cooling plate 31 may also cover the thermoregulated battery compartment 6 in addition to the cell set 1, so that the heat inside the thermoregulated battery compartment 6 can be transferred to the first liquid cooling plate 31.

Preferably, a plurality of the second liquid cooling plates 32 may be provided. Referring to Figs. 1 and 2 for details, the plurality of second liquid cooling plates 32 are vertically distributed on the insulating member 2. Each of the second liquid cooling plates 32 is provided between two adjacent rows of the cells 11, i.e., a large surface of the second liquid cooling plate 32 is in contact with the peripheral sides of the cells 11, so as to allow a heat exchange surface of each of the second liquid cooling plates 32 and the cells 11 to be increased, thereby effectively ensuring that the heat of the cells 11 can be rapidly conducted to the second liquid cooling plates 32, and improving the heat dissipation capacity of the battery pack.

Referring to Figs. 1 and 2 for details, the plurality of the above second liquid cooling plates 32 are connected in parallel through liquid cooling tubes. When the heat exchange medium is delivered to each of the second liquid cooling plates 32 at the same time, the two rows of the cells 11 on two opposite sides of each of the second liquid cooling plate 32 are capable of conducting the heat to each of the second liquid cooling plate 32, so as to realize the purpose of balanced heat dissipation of the two rows of the cells 11 at the same time, i.e., each row of the cells 11 is capable of being maintained at the optimal ambient temperature for use. Moreover, each of the second liquid cooling plates 32 is fixed between the two rows of the cells 11, which can also effectively reduce the overall volume of the battery pack. In addition, since the externally supplied heat exchange medium is diverted through the plurality of second liquid cooling plates 32, an unexpected effect of a reduction in the flow resistance of the liquid cooling system of the battery is realized.

Further, referring to Figs. 1 and 2 for details, since the cells 11 is preferably a cylindrical cell, the side walls of the cells 11 are curved. In order to make the assembly of the plurality of cells 11 more compact, the plurality of rows of cells 11 are staggered in position, and each of the second liquid cooling plates 32 is provided in a wavelike shape, and the peripheral surface of each of the cells 11 is fitted to the second liquid cooling plates 32. That is, each of the second liquid cooling plates 32 has a plurality of curved valleys, and each of the cells 11 is correspondingly fitted to the corresponding wave valley, and a shape and a size of each wave valley is preferably adapted to the shape and size of the cells 11, so as to make the heat exchange area between the cells 11 and the second liquid cooling plate 32 larger, which realizes the purpose of maximizing the heat exchange efficiency of the cells 11 of the cell set 1, thereby achieving the best heat dissipation effect.

### Second Embodiment

Disclosed in the above first embodiment is an insulated battery pack with good thermal insulation performance, and at the same time, the insulated battery pack combined with the liquid cooling plate 3 is also capable of providing a good heat dissipation effect, so as to solve the problem of contradiction between thermal insulation and heat dissipation that exists in the battery pack in the related technology, and to make the thermal insulation and heat dissipation maintain in a relatively balanced relationship, thereby ensuring that the insulated battery pack is in an optimal use state, and improving the stability and reliability of the insulated battery pack and the electrical devices to which it is applied..

Based on the insulated battery pack disclosed in the first embodiment, a thermal management method is further disclosed in the present application, which includes: comparing and evaluating a measured temperature value of a monitored battery with a preset temperature to adjust a use state and a heat exchange state of the battery. The preset temperature includes, from low to high, a first temperature range, a second temperature range, a third temperature range, a fourth temperature range and a fifth temperature range.

A first state indicates that the use state of the battery is a state of no charging and no discharging and the heat exchange state of the battery is a heating state when the measured temperature value is in the first temperature range.

A second state indicates that the use state of the battery is a charging state and the heat exchange state of the battery is the heating state when the measured temperature value is in the second temperature range.

A third state indicates that the use state of the battery is the charging state or a discharging state and the heat exchange state of the battery is the heating state when the measured temperature value is in the third temperature range.

A fourth state indicates that the use state of the battery is the charging state or the discharging state and the heat exchange state of the battery is a state of no heating and no cooling when the measured temperature value is in the fourth temperature range.

A fifth state indicates that the use state of the battery is the charging state or the discharging state and the heat exchange state of the battery is the cooling state when the measured temperature value is in the fifth temperature range.

It should be noted that the measured temperature value of the monitoring battery referred to herein may be the temperature of the monitoring cells 11, the temperature of the monitoring cell set 1, or the temperature of the monitoring battery case 5, or may be the temperature of any two or the temperature of a combination of the three.

In the present embodiment, the first temperature range is within a lowest temperature range, and considering that the performance of the power battery deteriorates sharply when in a temperature of below -20 °C, the first temperature range is preferably less than -20 °C. In this temperature range, in order to achieve the purpose of the best protection of the battery, the cells 11 are in a state of stopping charging and discharging. In combination with the thermal management in the battery management system, the heated heat exchange medium is controlled to be delivered to the liquid cooling plate 3, so that the heat of the heat exchange medium can be effectively transferred to each of the cells 11, thereby achieving the purpose of preheating and thawing for the cells 11. At the same time, under the action of the insulating member 2, it is possible to effectively avoid the problem that the heat supplied to the cells 11 is conducted to the battery case 5 and leads to a loss, and it also enables the battery pack to be quickly adjusted to recover to an optimal temperature range.

It has been found by long-term R&D and experiments in the field of batteries that the power battery operating in a temperature range of 15 °C to 35 °C , or a temperature range of 15 °C to 37 °C, is capable of achieving the best power output and input, the maximum usable energy, and the longest cycle life. Therefore, when the temperature of the battery recovers from below -20 °C to above -20 °C, the battery can be charged properly.

It can be learned from a surface distribution diagram of a relationship between the battery performance and the temperature that after the battery is preheated and thawed to -20 °C, the battery performance gradually improves as the temperature increases. Preferably, a median value of a temperature range of -20 °C to 15 °C is 5 °C, the temperature range of -20 °C to 15 °C is divided into a second temperature range of -20 °C to 5 °C and a third temperature range of 5 °C to 15 °C, and the battery is charged in the second temperature range.

When the temperature enters the third temperature range, the user may choose the use state of the battery according to the use environment of the battery pack. In order to enable the battery to obtain the optimal battery performance in the optimal temperature range and to ensure the longest service life of the battery, in the second temperature range and the third temperature range, the thermal management in the battery management system continuously controls the heated heat exchange medium to be delivered to the liquid cooling plate 3, so as to continuously supply heat for the cell set 1.

It should be noted that the temperature range of -20 °C to 15 °C is not limited to 5 °C, but may be 0 °C, or the like, as long as the temperature range of -20 °C to 15 °C can be relatively uniformly divided into two temperature ranges.

Preferably, the fourth temperature range is set to 15 °C to 37 °C, that is, the first temperature range is in the optimal temperature range. In this case, the battery does not need to continue to actively supply heat, that is, the cells 11 are stopped to be heated, and by only utilizing the heat generated by the cells 11 in the process of using the cells 1 and the heat saved in the heat exchange medium inside the liquid cooling plate 3, the battery is allowed to be in the relatively stable temperature range, i.e., the battery can be in a relatively stable temperature range, i.e., the battery can maintain the optimal performance.

Further, when the temperature of the battery exceeds 37 °C, the fifth temperature range is greater than 37 °C, and in this case, the fifth temperature range is in a relatively high temperature range. In this case, the battery performance is gradually affected by the high temperature, i.e., after the battery enters into the fifth temperature range, and the electromagnetic performance gradually decreases as the temperature increases. Therefore, after the battery enters the fifth temperature range, it needs to be cooled while in use. In combination with the thermal management in the battery management system, the low-temperature heat exchange medium is controlled to be delivered to the liquid cooling plate 3, then the heat of each of the cells 11 is transferred to the heat exchange medium, and ultimately transferred out of the battery pack along with the heat exchange medium, so as to achieve the effect of efficient heat dissipation of the battery through the liquid cooling plate 3.

At the same time, under the action of the insulating member 2, it can effectively avoid that the heat outside the battery case 5 is less or even unable to be transferred to the cell set 1 inside the battery case 5, so as to realize a rapid recovery of the cell set 1 to the optimal temperature range, thus ensuring that the battery pack can maintain the optimal battery performance for a long period of time.

Further, the second temperature range is further provided with a first termination temperature value, and the first state is exited when the measured temperature value is greater than the first termination temperature value. Preferably, the measured temperature value is set to -15 °C or set to -10 °C. The battery performance drops suddenly at -10 °C. When the measured temperature value recovers to be greater than -10 °C, the battery performance recovers substantially, and the first state is exited.

Further, the third temperature range is further provided with a second termination temperature value, and the second state is exited when the measured temperature value is greater than the second termination temperature value. Preferably, the measured temperature value is set to 10 °C. The fourth temperature range is further provided with a third termination temperature value, and the third state is exited when the measured temperature value is greater than the third termination temperature value. Preferably, the measured temperature value is set to 20 °C.

That is, the thermal management in the battery management system continuously controls the heated heat exchange medium to be delivered to the liquid cooling plate 3 until the temperature of the battery is within the fourth temperature range of 15 °C to 37 °C at the measured temperature value of 20 °C, which ensures that the battery maintains a dynamic balance within the fourth temperature range, avoiding a problem that, after the temperature of the battery reaches 15 °C, the heat supply is stopped so that the temperature of the battery falls below 15 °C and the battery performance is not in the optimal performance range, thereby effectively improving the stability of the battery pack.

Further, the fourth temperature range is further provided with a fourth termination temperature value, and the fifth state is exited when the measured temperature value is less than the fourth termination temperature value. Preferably, the fourth termination temperature value is greater than the third termination temperature value, and the measured temperature value is set to 33 °C. That is, the thermal management in the battery management system continuously controls the cooled heat exchange medium to be delivered to the liquid cooling plate 3 until the temperature of the battery is within the fourth temperature range of 15 °C to 37 °C at the measured temperature value of 33 °C, which ensures that the battery maintains a dynamic balance within the fourth temperature range, avoiding a problem that, after the temperature of the battery reaches 37 °C, the battery is stopped to be cooled so that the temperature of the battery rises above 37 °C and the battery performance is not in the optimal performance range, thereby further effectively improving the stability of the battery pack.

As can be learned from the above, the above temperature is divided into a plurality of temperature ranges based on the optimal temperature value of the battery performance and the low temperature mutation value of the battery performance, so that a temperature controllable range of the thermal management of the battery is more reasonable, and by utilizing the first termination temperature value, the second termination temperature value, the third termination temperature value, and the fourth termination temperature value, a problem of frequent switching of the thermal management in the battery management system can be effectively avoided.

More importantly, by using the thermal management method in conjunction with the insulating member 2 and the liquid cooling plate 3, the thermal insulation and heat dissipation performance of the battery pack can be improved very effectively, and at the same time, it can also ensure that the battery pack and the electric device, such as an electric vehicle, are in a better balance of heating and heat dissipation and are kept in the state of optimal performance, which greatly improves the stability and reliability of the battery pack and the electric device.

## Claims

1. An insulated battery pack, comprising:
a cell set (1), comprising a plurality of rows of cells (11); and
an insulating member (2), provided with two insulating layers (21), wherein the plurality of rows of the cells (11) are provided on one of the insulating layers (21), the two insulating layers (21) are provided opposite to each other, a hollow cavity is provided between the two insulating layers (21) , the hollow cavity is filled with gas to form an air layer (22), so as to reduce thermal conduction between two opposite sides of the air layer (22).

2. The insulated battery pack according to claim 1, wherein the insulating member (2) is further provided with a plurality of positioning holes (23), both a shape and a size of each of the positioning holes (23) are adapted to a shape and a size of each of the cells (11), and each of the cells (11) is fixed inside each of the positioning holes (23).

3. The insulated battery pack according to claim 2, wherein an insulating ring (24) is provided on an inner side wall of each of the positioning holes (23), and is abutted against an end surface of the corresponding cell (11).

4. The insulated battery pack according to claim 1, 2 or 3, further comprising at least one liquid cooling plates (3), wherein the at least one liquid cooling plates (3) are thermally connected to the cell set (1).

5. The insulated battery pack according to claim 4, wherein a plurality of the liquid cooling plates (3) are vertically distributed on the insulating member (2), each of the plurality of the liquid cooling plates (3) is provided between two adjacent rows of the cells (11), and the plurality of the liquid cooling plates (3) are connected in parallel through liquid cooling tubes.

6. The insulated battery pack according to claim 5, wherein each of the cells (11) is a cylindrical cell, and the plurality of rows of the cells (11) are staggered in position, and each of the plurality of liquid cooling plates (3) is provided in a wavelike shape, so that a peripheral surface of each of the cells (11) is engaged with the corresponding liquid cooling plate (3).

7. The insulated battery pack according to claim 4, wherein further comprising a tray rack (4), wherein the insulating member (2) is provided on the tray rack (4).

8. The insulated battery pack according to claim 7, further comprising a battery case (5), wherein the cell set (1), the insulating member (2), the tray rack (4) and each of the liquid cooling plates (3) are all fixed inside the battery case (5).

9. The insulated battery pack according to claim 8, wherein the tray rack (4) is provided with a plurality of pressure relief openings (41), each of the cells (11) is provided in correspondence with each of the pressure relief openings (41);
wherein a pressure relief channel is provided between the tray rack (4) and the battery case (5), and an inner bore of the insulating ring (24), the pressure relief openings (41) and the pressure relief channel are in communication with each other, sequentially, so as to guide hot gas flow generated by the cells (11) in a thermal runaway state to be discharged out of the battery case (5).

10. The insulated battery pack according to claim 9, wherein the battery case (5) comprises a bottom guard plate (52) and an outer frame (51) in a loop shape, a first step (511), a second step (512), and a third step (513) are provided on an inner side wall of the outer frame (51), sequentially arranged from a large surface of the outer frame (51) along a height direction of the outer frame (51), the bottom guard plate (52) is fixed to the first step (511), and the tray rack (4) is fixed to the third step (513).

11. The insulated battery pack according to claim 10, wherein the pressure relief channel comprises a first pressure relief chamber (531) and a second pressure relief chamber (532), the first pressure relief chamber (531) is formed between the tray rack (4), the bottom guard plate (52) and an inner side wall of the second step (512), the second pressure relief chamber (532) is provided in the outer frame (51), and the first pressure relief chamber (531) is in communication with the second pressure relief chamber (532).

12. The insulated battery pack according to claim 10, wherein the insulating member (2) and inner side walls of the outer frame (51) form a thermoregulated battery compartment (6), and the cell set (1) is located inside the thermoregulated battery compartment (6).

13. A thermal management method for a battery pack, comprising:
comparing and evaluating a measured temperature value of a monitored battery with a preset temperature to adjust a use state and a heat exchange state of the battery, wherein the preset temperature comprises, from low to high, a first temperature range, a second temperature range, a third temperature range, a fourth temperature range and a fifth temperature range;
wherein a first state indicates that the use state of the battery is a state of no charging and no discharging and the heat exchange state of the battery is a heating state when the measured temperature value is in the first temperature range;
a second state indicates that the use state of the battery is a charging state and the heat exchange state of the battery is the heating state when the measured temperature value is in the second temperature range;
a third state indicates that the use state of the battery is the charging state or a discharging state and the heat exchange state of the battery is the heating state when the measured temperature value is in the third temperature range;
a fourth state indicates that the use state of the battery is the charging state or the discharging state and the heat exchange state of the battery is a state of no heating and no cooling when the measured temperature value is in the fourth temperature range; and
a fifth state indicates that the use state of the battery is the charging state or the discharging state and the heat exchange state of the battery is the cooling state when the measured temperature value is in the fifth temperature range.

14. The thermal management method according to claim 13, wherein the first temperature range is less than -20 °C, the second temperature range is in a range of -20 °C to 5 °C, the third temperature range is a range of 5 °C to 15 °C, the fourth temperature range is a range of 15 °C to 37 °C, and the fifth temperature range is greater than 37 °C.

15. The thermal management method according to claim 13 or 14, wherein the second temperature range is further provided with a first termination temperature value, and the first state is exited when the measured temperature value is greater than the first termination temperature value.

16. The thermal management method according to claim 13 or 14, wherein the third temperature range is further provided with a second termination temperature value, and the second state is exited when the measured temperature value is greater than the second termination temperature value.

17. The thermal management method according to claim 13 or 14, wherein the fourth temperature range is further provided with a third termination temperature value, and the third state is exited when the measured temperature value is greater than the third termination temperature value.

18. The thermal management method according to claim 17, wherein the fourth temperature range is further provided with a fourth termination temperature value, and the fifth state is exited when the measured temperature value is less than the fourth termination temperature value.
